# EUROPEAN PATENT APPLICATION

(11) **EP 4 620 895 A1**
(43) Date of publication of application: **24.09.2025**
(21) Application number: 25164242.7
(22) Date of filing: 17.03.2025
(51) Int. Cl.: B66F 9/075, B60K 1/00

(54) **A COOLING SYSTEM FOR AN AXLE SYSTEM OF AN INDUSTRIAL TRUCK**

(30) Priority: 18.03.2024 IT 202400005914
(71) Applicant: Toyota Material Handling Manufacturing Italy S.p.A, 40132 Bologna (IT)
(72) Inventor: Dinale, Silvia, 40132 Bologna (IT); Buzzi, Luigi, 40132 Bologna (IT)
(74) Representative: Hoffmann Eitle

(57) **Abstract**

A forced ventilation cooling system (10) for cooling an axle system (30, 31) comprising an electric drive device (31) of an industrial truck and a control module (30) of the electric drive device; the cooling system comprises: a structure (11, 12, 13), a ventilation device (16) connected to the structure (11, 12, 13), wherein said structure includes a conveying portion (13) for directing the air moved by the ventilation device (16) towards a surface of the axle system (30, 31). The system comprises fixing means (14, 15) for fixing the structure (11, 12, 13) to a frame (40) of the industrial truck.

## Description

### Field of the invention

The present invention relates to a forced ventilation cooling system for cooling an axle system of an industrial truck, and an industrial truck comprising such a cooling system.

### Technical background

It is known in the art to make industrial trucks equipped with material handling means, such as a forklift truck, which can be used on an industrial site, a warehouse, a port or the like. Recently, electrically powered industrial trucks have spread, i.e. equipped with a battery capable of powering the main functions of the industrial truck such as locomotion and/or material handling. In these trucks, the drive is typically of the electric type and may include an electric motor integrated into the axle of the truck; the electric motor is controlled by a power electronic module associated with the axle. In this type of truck, the problem of cooling the axle system arises as both the control module and the electric motor generate heat during operation.

It is known to make ventilation systems to cool the drive system integrated into the axle. These systems include an air conveyor and a fan that are coupled directly to the axle of the industrial truck. For this purpose, the outer surface of the axle must include appropriate means for anchoring the cooling system, such as suitable threaded holes, a fin or other surface features. However, machining the outer surface of the axle involves a rather high cost. Furthermore, a cooling system designed to be mounted directly on an axle cannot be applied to an industrial truck having a smooth axle. The problem therefore arises of making a cooling system that is also applicable to industrial trucks provided with an axle with a smooth outer surface, and which allows to reduce the production costs of the industrial truck.

### Summary of the invention

In light of the above, the present disclosure proposes a forced ventilation cooling system for cooling an axle system of an industrial truck, the axle system comprising an electric drive device of an industrial truck and a control module of the electric drive device, the cooling system comprising:
- a structure,
- a ventilation device connected to the structure,
- wherein said structure includes a conveying portion for directing the air moved by the ventilation device towards a surface of the axle system,
characterized in that it comprises fixing means for fixing the structure to a frame of the industrial truck.

Preferably, the fixing means are configured to fix the structure of the cooling system to a substantially horizontal lower wall of the frame on one side and to a substantially vertical front or rear wall of the frame on the other side.

Preferably, the structure of the cooling system is configured to be arranged in proximity of an outer casing of the electric drive device.

Preferably, the structure of the cooling system comprises:
- a first end portion which forms a mouth for suctioning the air,
- a second end portion opposite to the first end which forms a support part of the ventilation device and
- a plate which connects the first and the second end portion.

Preferably, the first end portion is located in proximity of a front wall of the frame, while the second end portion is located in proximity of the lower wall of the frame which is substantially horizontal.

Preferably, the first end portion, the second end portion and the plate form a seat configured to accommodate at least a part of the control module of the electric drive device.

Preferably, the fixing means are configured to fix the structure to the frame of the industrial truck at the first and second end portions.

In one aspect, an industrial truck is provided comprising:
- a frame,
- an axle system comprising an electric drive device of the industrial truck and a control module of the electric drive device, and
- a cooling system for the axle system as described above.

Preferably, the electric drive device comprises an outer casing provided with an outer surface that is substantially cylindrical and without cooling fins for an extension equal to at least 50% of the axial extension of the electric drive device.

Preferably, the cooling system is configured to direct the air moved by the ventilation device towards a surface of the electric drive device and a surface of the control module of the electric drive device.

Preferably, the structure of the cooling system is spaced apart from the electric drive device.

Preferably, an interspace is formed between the plate and the electric drive device, the seat for receiving at least part of the control module is formed on one side of the plate opposite with respect to the interspace; wherein - in use - the ventilation air is conveyed from the ventilation device both into the interspace and towards the part of the control module housed in the seat.

### Brief description of the drawings

The present disclosure will be illustrated with reference to exemplary embodiments described with reference to the accompanying drawings.

In the drawings:
- figure 1 illustrates a view of an industrial truck according to the present disclosure with a material handling system removed;
- figure 2 illustrates a perspective view of a cooling system according to the present disclosure;
- figure 3 illustrates a view of an axle system of the truck according to the disclosure;
- figure 4 illustrates a sectional view according to plane A-A depicted in figure 3;
- figure 5 illustrates a sectional view according to plane A-A depicted in figure 3 with the side wall of the frame and the portion of the axle system that supports the wheel of the industrial removed;
- figure 6 illustrates a perspective view of a cooling system according to an alternative;
- figure 7 illustrates a perspective view of a cooling system according to a further alternative.

### Detailed description

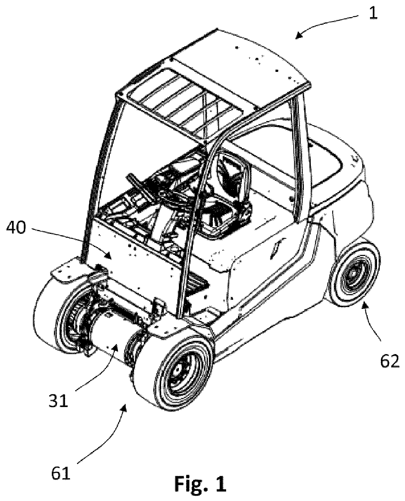

With reference to the figures, an industrial truck 1 according to the present disclosure is shown in figure 1. For example, the industrial truck 1 can be used in industrial sites, warehouses, ports, airports, logistic hubs or the like. The industrial truck 1 may for example be a forklift truck. The industrial truck 1 could advantageously be a counterbalanced truck. Another type of industrial truck could also be realized according to the present disclosure. In general, the industrial truck may include material handling means, even if not shown in the figure; for example, the material handling means may be mounted in the front part of the industrial truck 1; the material handling means can for example include a mast along which a material gripping device, such as a fork, a gripper, or other known devices, can slide in a substantially vertical direction.

The industrial truck 1 includes a frame 40, a front axle system 61, and a rear axle system 62. The industrial truck also includes a truck driver's compartment in which a driver's seat is located.

The industrial truck 1 may be an electrically driven, or electrically powered, truck. The electrically powered industrial truck 1 can be of the hybrid type (i.e. equipped with a traction or drive system that includes at least one electric motor and at least one combustion engine), or it could be completely electric (therefore with a traction system that does not include a combustion engine and instead includes only one or more electric motors). The industrial truck 1 may be equipped with an electric battery system; for example, the electric battery system may be configured to power a primary function of the industrial truck, such as for example the locomotion function and/or the material handling function. The drive system includes an electric drive device 31, such as an electric motor, integrated into the axle system 61. The axle system 61 equipped with the electric drive device 31 may for example correspond to the front axle of the industrial truck, as depicted in figure 1, but could also correspond to the rear axle 62. In an alternative embodiment, both axles could include an axle system provided with an electric drive device. The axle system 61 may comprise an electric drive device 31 of an industrial truck and a control module 30 of the electric drive device.

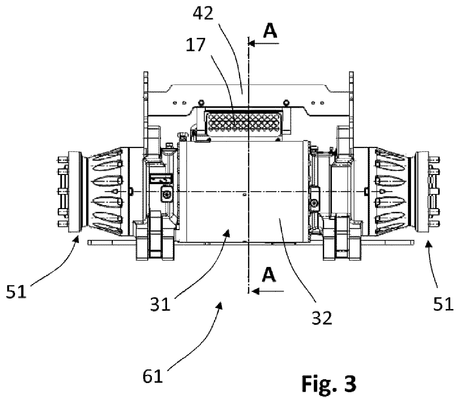

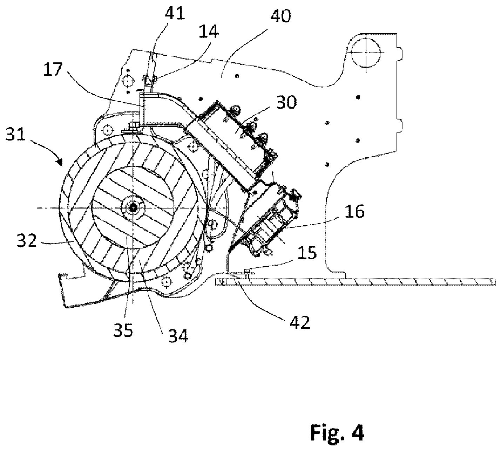

As depicted in figures 3-5, the drive device 31 may include an electric motor integrated into the axle system. The electric motor may include a stator 34 integrally formed with an outer casing 32 of the axle system (in particular of the electric drive device) and a rotor 35 positioned inside the stator and connected to a motion transmission for imparting rotation to the wheels mounted on the axle; the wheels of the industrial truck may be mounted at the portions 51 shown in figure 3 arranged at opposite ends of the axle system. Advantageously, the stator 34 of the electric motor is thermally coupled to the outer casing 32 of the axle system to favour the evacuation of heat from the motor through an outer surface of the casing 32. The control module 30 (shown in figure 4) may include one or more power electronic elements (switches) for controlling the power supply of the electric motor.

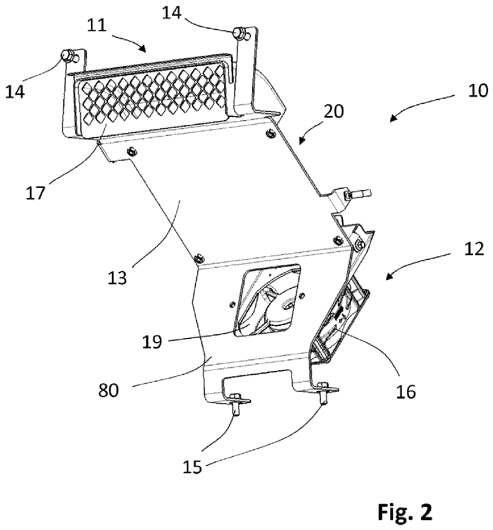

In the present disclosure, referring to figures 2 to 5, the industrial truck 1 includes a forced ventilation cooling system 10 for cooling the axle system 61.

Preferably, the cooling system 10 is configured to direct the air moved by the ventilation device 16 towards a surface of the electric drive device 31 and/or a surface of the control module 30 of the electric drive device 31. In this way, the cooling system 10 can be configured to simultaneously cool both the electric drive device and the relative control module associated therewith. Preferably, the air moved by the ventilation device 16 is conveyed into a space comprised between the control module 30 and the electric drive device 31.

The cooling system 10 comprises a frame 11, 12, 13, and a ventilation device 16 connected to the structure 11, 12, 13. The ventilation device 16 is supported by the structure 11-13. The ventilation device 16 may for example be electrically powered. The support structure 11-13 includes a conveying portion 13 configured to direct the air moved by the ventilation device 16 towards a surface of the axle system 30, 31. Furthermore, the cooling system includes fixing means 14, 15 configured to fix the structure 11, 12, 13 to the frame 40 of the industrial truck. The support structure is not fixed to the axle system. The structure 11-13 can be maintained in its operating position by the fixing means 14, 15 independently of a possible connection with the axle system, i.e. independently of a connection with an outer casing 32 of the axle system containing the electric drive device 31.

The fixing means 14, 15 are preferably configured to fix the structure of the cooling system to a substantially horizontal lower wall 42 of the frame 40 on one side and to a substantially vertical front or rear wall 41 of the frame 40 on the other side. In the example in the figure, the structure of the cooling system is fixed at one end to a front wall 41 of the frame 40 and at the opposite end to the lower wall 42 of the frame 40. The fixing means 14, 15 may for example include releasable fixing means, such as for example screws. For this purpose, the frame 40 may include suitable means for coupling to the fixing means 14, 15 of the cooling system, such as for example threaded holes. The fixing could in any case be made in another way, including by welding or other releasable coupling system.

The structure 11, 12, 13 of the cooling system is configured to be arranged in proximity of an outer casing 32 of the electric drive device 31, preferably at least partly above the electric drive device as shown in the figure. However, the structure 11-13 could also be arranged laterally or below the axle system. Preferably the structure 11-13 may be configured to support the control module 30. The control module 30 may be mounted on the structure 11-13.

The structure of the cooling system preferably comprises, as is well illustrated in figure 2:
- a first end portion 11 which forms a mouth 17 for suctioning the air,
- a second end portion 12 opposite to the first end which forms a support part of the ventilation device 16 and
- a plate 13 which connects the first and the second end portion.

Generally, the cooling air flow runs from the first end portion 11 to the second end portion 12.

Preferably, the control module 30 is mounted on the structure at the plate 13. The first end portion 11, the second end portion 12 and the plate 13 form a seat 20 configured to accommodate at least a part of a control module 30 of the electric drive device 31. For example, the control module 30 may include a heatsink, which is thermally coupled to the power electronics of the module. The heatsink can be accommodated in the seat 20. The heatsink could for example include a finned portion.

In a preferred embodiment, the fixing means 14, 15 are configured to fix the structure to the frame of the industrial truck at the first and second end portions 11, 12. The end portions may include special flanges provided with holes intended to receive the fixing means. Preferably, each end portion 11, 12 may be provided with two fixing elements of the fixing means, for example two screws. Advantageously, the end portion 12 includes a plate-shaped part 80 on which the ventilation device 16 is mounted. The plate-shaped portion 80 forms the opening 19 for making the air that is drawn from the ventilation system flow. Two arms on which the fixing means for fixing the structure to the frame 40 are mounted protrude from the plate-shaped part 80. Similarly, the end portion 11 comprises two arms on which the fixing means 14 for fixing the structure to the frame 40 are mounted.

The outer casing 32 of the electric drive device is preferably provided with a substantially cylindrical outer surface. The outer casing 32 of the electric drive device is preferably provided with a substantially cylindrical outer surface that extends for at least 50% of the axial extension of the electric drive device, preferably for substantially the entire extension thereof. The outer casing 32 of the electric drive device is preferably provided with a substantially smooth outer surface that extends for at least 50% of the axial extension of the electric drive device, preferably for substantially the entire extension thereof; preferably, the outer surface of the electric drive device is without cooling fins for an extension equal to at least 50% of the axial extension of the electric drive device, preferably for substantially the entire extension thereof.

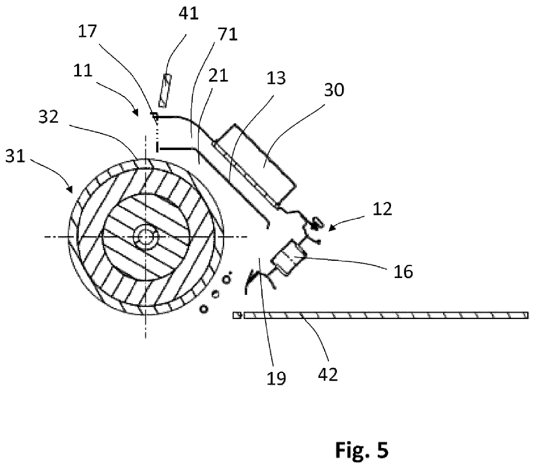

In one embodiment, the structure 11, 12, 13 of the cooling system is spaced apart from the electric drive device 31. As shown in figure 5, the structure 11-13 is not in contact with the drive device 31. In an alternative embodiment, however, the structure could also rest on the outer surface of the drive device. Preferably, an interspace 21 is formed between the plate 13 and the electric drive device 31. The seat 20 for receiving at least part of the control module 30 is formed on a side of the plate 13 opposite to the interspace 21. In use, ventilation air is conveyed by the ventilation device 16 into the interspace 21. Preferably, ventilation air is conveyed by the ventilation device 16 also towards the part of the control module 31 accommodated in the seat 20. For this purpose, a channel 71 is formed above the plate 13 which conveys cooling air towards the control module 30, i.e. towards the seat 20. The channel 71 is formed for example by the end portion 11 and connects the suction mouth 17 to the seat 20. The channel 71 may also extend between the seat 20 and the ventilation device 16 at the end portion 12 of the structure. The end portion 12 may advantageously also comprise a mouth 19 which places in communication the ventilation device 16 and the interspace 21. A protection grid can advantageously be provided on the suction mouth 17, as can be clearly seen in figure 2. In one possible implementation, the structure 11-13 could be made with a folded metal sheet and/or a combination of sheet parts welded together.

The cooling system described herein can also be supplied separately from the industrial truck and can be used to modernize an already existing industrial truck.

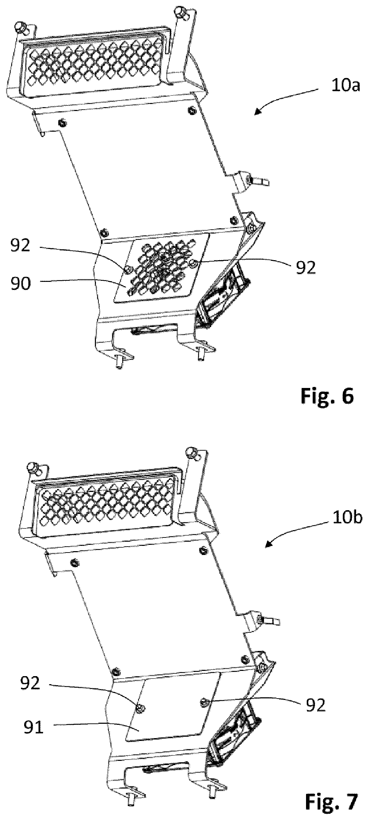

Numerous variants of the present disclosure are possible. For example, in the variant of figure 6, the cooling system 10a is identical to that described above with reference to figure 2, with the exception that a protection grid 90 is applied to the opening 19. The protection grid 90 may have the function of preventing the passage of foreign bodies or dirt towards the ventilation device 16. The protection grid can be fixed to the wall 80 of the system 10a by fixing means engaged in suitable holes obtained on the wall 80, for example two screws 92. In the variant of figure 7, the cooling system 10b is identical to that described above with reference to figure 2, with the exception that a closing wall 91 is applied on the opening 19. The wall 91 prohibits the passage of air through the opening 19 in the wall 80. This allows the suction flow to be controlled, for example by increasing the cooling flow towards the control module 30. The wall 91 can be fixed to the wall 80 of the system 10b by fixing means engaged in suitable holes obtained in the wall 80, for example two screws 92.

## Claims

1. A forced ventilation cooling system (10) for cooling an axle system (30, 31) of an industrial truck, wherein the axle system comprises an electric drive device (31) of the industrial truck and a control module (30) of the electric drive device, the cooling system comprising:
- a structure (11, 12, 13),
- a ventilation device (16) connected to the structure (11, 12, 13), wherein said structure includes a conveying portion (13) for directing the air moved by the ventilation device (16) towards a surface of the axle system (30, 31),
**characterised in that** it comprises fixing means (14, 15) for fixing the structure (11, 12, 13) to a frame (40) of the industrial truck; and
**in that** the structure comprises:
- a first end portion (11) which forms a mouth (17) for suctioning the air,
- a second end portion (12) opposite to the first end which forms a support part of the ventilation device (16) and
- a plate (13) which connects the first and the second end portion.

2. A cooling system according to claim 1, wherein the fixing means (14, 15) are configured to fix the structure of the cooling system to a substantially horizontal lower wall (42) of the frame (40) and to a substantially vertical front or rear wall (41) of the frame (40).

3. A cooling system according to one of the preceding claims, wherein the structure (11, 12, 13) of the cooling system is configured to be arranged in proximity of an outer casing (32) of the electric drive device (31).

4. A cooling system according to any one of claims 1 to 3, wherein the first end portion (11), the second end portion (12) and the plate (13) form a seat (20) configured to accommodate at least a part of the control module (30) of the electric drive device (31).

5. A cooling system according to any one of claims 1 to 4, wherein the fixing means (14, 15) are configured to fix the structure to the frame of the industrial truck at the first and the second end portions (11, 12).

6. An industrial truck comprising:
- a frame (40),
- an axle system comprising an electric drive device (31) of the industrial truck and a control module (30) of the electric drive device, and
- a cooling system (10) for the axle system according to one or more of claims 1 to 5.

7. The industrial truck according to claim 6, wherein the electric drive device (31) comprises an outer casing (32) provided with an outer surface that is substantially cylindrical and without cooling fins for an extension equal to at least 50% of the axial extension of the electric drive device.

8. The industrial truck according to claims 6 or 7, wherein the cooling system is configured to direct the air moved by the ventilation device (16) towards a surface of the electric drive device (31) and a surface of the control module (30) of the electric drive device (31).

9. The industrial truck according to one of claims 6 to 8, wherein the structure (11, 12, 13) of the cooling system is spaced apart from the electric drive device (31).

10. The industrial truck according to one of claims 6 to 9, wherein the cooling system is according to claim 4, wherein an interspace (21) is formed between the plate (13) and the electric drive device (31), the seat (20) for receiving at least part of the control module (30) is formed on one side of the plate (13) opposite with respect to the interspace (21); wherein - in use - the ventilation air is conveyed from the ventilation device (16) both into the interspace (21) and towards the part of the control module (31) housed in the seat (20).

11. The industrial truck according to claim 10, wherein the second end portion (12) includes an opening (19) which places the ventilation device (16) in communication with the interspace (21); wherein alternatively:
- said opening (19) is left fully open,
- said opening (19) is closed by a closing wall (91), or
- a protection grid (90) is applied on the opening (19).
